# EUROPEAN PATENT APPLICATION

(11) **EP 0 813 340 A1**
(43) Date of publication of application: **17.12.1997**
(21) Application number: 96115514.0
(22) Date of filing: 27.09.1996
(51) Int. Cl.: H04N 5/64, B60N 2/46, A47C 7/72

(54) **Movable display supporting device**

(30) Priority: 10.06.1996 JP 5270/96 U
(71) Applicant: JAMCO CORPORATION, Mitaka-shi, Tokyo 181 (JP)
(72) Inventor: Takazaki, Kenzo, Tokyo 181 (JP)
(74) Representative: TER MEER STEINMEISTER & PARTNER GbR

(57) **Abstract**

Objective

To offer a movable display supporting device which enables the display to be easily moved and maintained at a position and direction suitable for the viewing distance which may vary depending on the eye position and viewing direction of the passenger affected by the sitting height and posture of the passenger and reclining condition of the passenger seat.

Solution

In the movable display supporting device (10), the supporting arm (15), which is in perpendicular to the horizontal axis L1 cutting across the passenger seat and which can freely rotate around its own axis, is connected at the front end of the armrest having a display storage cavity by the passenger seat in a way to be rotatable around the horizontal axis L1, and a parallelogram link mechanism is made by the tip of the supporting arm (15), parallel links (17A) and (17B) and the universal joint (18), and the display mounting part (19) is connected to the universal joint block in a way to function as a universal joint.

## Description

### Field of the invention

This invention relates to a movable supporting device for mounting displays onto passenger seats for providing various image services in passenger airplane, train or automobile.

### Background of the invention

In passenger cabin of airplane, train or automobile, large TV's are installed to provide various image services. As the type of image services become diversified, the trend is to install a small size display to each passenger seat so that each passenger can select his or her desired image service at his or her own seat.

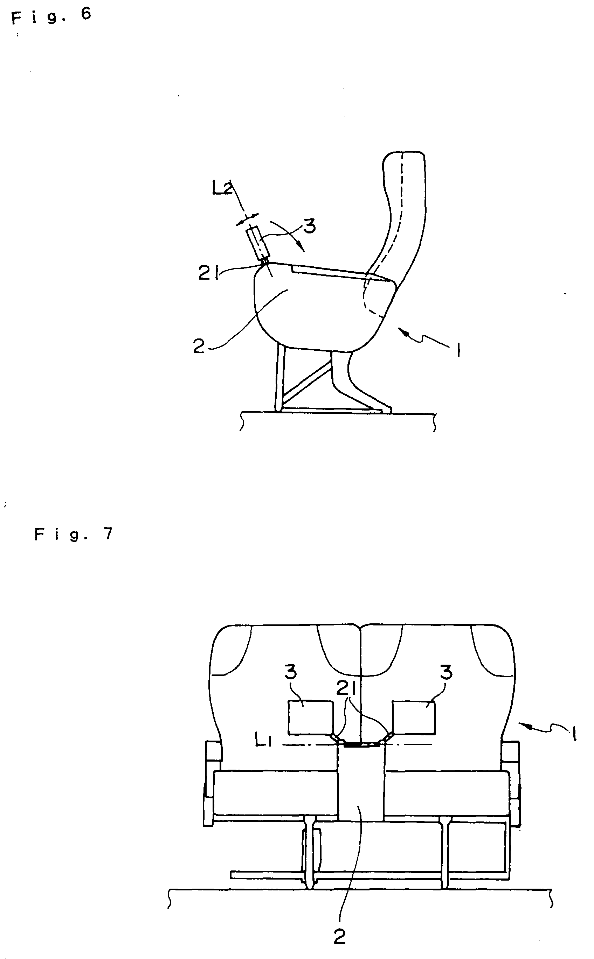

According to the conventional technologies, displays for each seat as described above are supported in a way that they can be stored in the side of each seat, and the supporting device has a structure as described in Fig. 6 through Fig. 11.

In the case of Example 1 as described in Fig. 6 and Fig. 7, display storage cavity is provided in the armrest 2 on the side of passenger seat 1 in a way that the display supporting device is rotated resulting both sides of the display in viewing position becoming the upper edge and the lower edge and then the display is freely stored or pulled out in a straight up position with the upper edge stored in the rear side and the lower edge stored in the front side of the storage cavity, and the upper side of the display storage cavity is open so that the display 3 in straight up position can be stored or pulled out, and a lid which can be opened or closed freely is installed on the upper surface of the armrest 2 to cover the cavity and for the arm to rest on.

One side of the lower edge of the display 3 in viewing position is mounted at the tip of a short supporting arm 21, and the base of the supporting arm 21 is connected to the upper side front end of the display storage cavity in a way to freely rotate around the horizontal axis L1 which cuts across the passenger seat and around the forward bent axis L2 bent at a certain angle.

When using the display 3 stored in the display storage cavity, open the lid of the armrest 2 on which the arm is rested, pull up the display 3 out of the opening on the upper side of the display storage cavity, and make it rotate around horizontal axis L1. Then the supporting arm 21 will fall forward, hit the stopper at the aforementioned bent angle and stay there. In this situation, if the display is rotated around the aforementioned forward bent axis L2, it will hit the stopper at around 90° point and stay there. At this point, the display 3 is set in a viewing position in front of the seat and at the aforementioned forward bent angle.

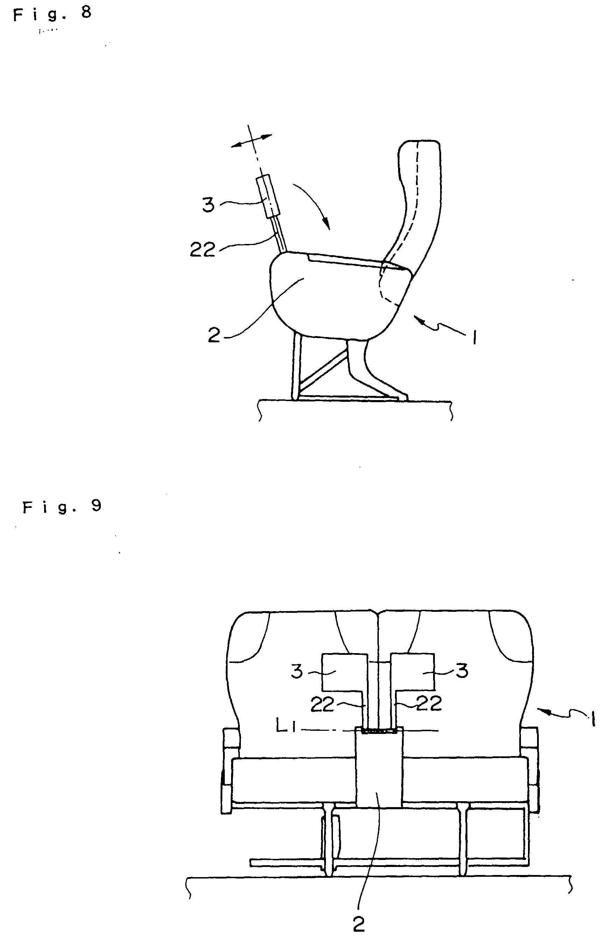

In the case of example 2 as described in Fig. 8 and Fig. 9, display storage cavity is provided in the armrest 2 on the side of passenger seat 1 in a way that the display supporting device is rotated resulting both sides of the display in viewing position becoming the upper edge and the lower edge and then the display is freely stored or pulled out in a straight up position with the upper edge stored in the rear side and the lower edge stored in the front side of the storage cavity, and the upper side of the display storage cavity is open so that the display 3 in straight up position can be stored or pulled out, and a lid which can be opened or closed freely is installed on the upper surface of the armrest 2 to cover the cavity and for the arm to rest on.

One side of the lower edge of the display 3 in viewing position is mounted to the tip of a supporting arm 22 which extends straight down from the display, and the base of the supporting arm 22 is connected to the upper side front edge of the display storage cavity in a way that the display will rotate around the axis of the supporting arm 22 itself and around the horizontal axis which cuts across the passenger seat.

When using the display 3 stored in the display storage cavity, open the lid of the armrest 2 on which the arm is rested, pull up the display 3 out of the opening on the upper side of the display storage cavity, and make it rotate around the horizontal axis L1. Then the supporting arm 22 will fall forward, hit the stopper at a certain bent angle and stay there. In this situation, if the supporting arm 22 itself is rotated around its own axis, it will hit the stopper at around 90° point and stay there. At this point, the display 3 is set in a viewing position in front of the seat and at an appropriate forward bent angle.

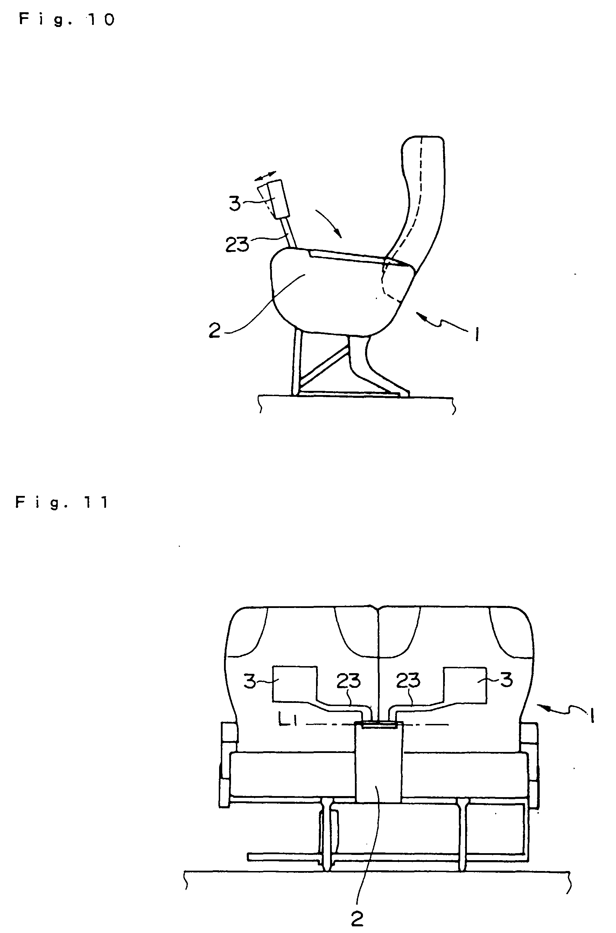

In the case of example 3 as described in Fig. 10 and Fig. 11, a display storage cavity is provided inside the armrest 2 on the side of the passenger seat in a way the display 3 can be freely stored or taken out with its flat face in straight up position, and the upper side of the display storage cavity is open so that the display 3 in straight up position can be stored or pulled out, and a lid which can be opened or closed freely is installed on the upper surface of the armrest 2 to cover the cavity and for the arm to rest on.

One side of the lower edge of the display 3 in viewing position is connected to the tip of a supporting arm 23 which extends down with an angle, and the base of the supporting arm 23 is connected to the upper edge front side of the display storage cavity in a way that the display will rotate around the axis of the supporting arm 23 itself and around the horizontal axis L1 which cuts across the passenger seat.

When using the display 3 stored in the display storage cavity, open the lid of the armrest 2 on which the arm is rested, pull up the display 3 out of the opening on the upper side of the display storage cavity, and make it rotate around the horizontal axis L1. Then the supporting arm 23 will fall forward, hit the stopper at a certain bent angle and stay there. In this situation, if the supporting arm 23 itself is rotated around its own axis, it will hit the stopper at around 90° point and stay there. At this point, the display 3 is set in a viewing position in front of the seat and at an appropriate forward bent angle.

In cases of movable display supporting devices in above three examples, as the connection of the display 3 to the tip of supporting arms 21, 22 and 23 is made to be a pivot using adjusting screw in a way that the angle of the display 3 in viewing position can be conveniently adjusted forward or backward, the tip of the supporting arm 21, 22 and 23 can be moved to an angle suitable for viewing, thus the adjustment of the display 3 angle, forward or backward, can be made within a certain limited range.

### Summary of the invention

In the cases of moval display supporting devices based on conventional technologies as described above, there are inconveniences as follows.

In the case of example 1, as the lower corner of the display 3 in viewing position is connected to the front end of the armrest 2 via a short supporting arm 21, the position of the display is off-centered to one side and very low when looked from the seated passenger and the passenger must bend the body forward to see the display. On top of that, as the liquid crystal display is hard to see from an angled position, the passenger must bring his or her face to a position facing the display straight, which forces the passenger to take even more unconfortable position.

In the case of example 2, the problem of forward bending of the passenger body is less comparing to example 1, but the problem of hard looking from an angled position still remains unsolved.

In the case of example 3, the two problems found in example 1 and example 2 are solved. But the viewing position of the passenger's face will be limited to a position directly facing the display and the distance to the display will vary depending on the passenger's sitting height, even though the display is right in front of the passenger. Therefore, the passenger must adjust the viewing distance by the posture he or she takes, which is a problem from a viewpoint of human engineering. Furthermore, the structure of the movable supporting device becomes longer and bigger comparing to those of example 1 and example 2 making it difficult to store in the narrow display storage cavity inside the armrest 2.

In addition to the above, the appropriate viewing distance varries depending on the type of image presented. For example, viewing distance for games will be shorter than that for movies or information service. And the passenger's posture will be also different depending on the seat reclining condition. That naturally affects the distance to the display also. In those cases, if the display position is fixed in the back and forth direction as in the cases of the three conventional technologies, the adjustment will have to be made by the passenger's posture, which will cause fatigue on the passenger.

This invention is intended to solve the problems with the display supporting device based on the conventional technologies without changing the display storage cavity.

The movable display supporting device under this invention installs the display onto the armerest portion, beside the passenger seat, where the display storage cavity is provided, and this movable display supporting device consists of; a supporting arm which rotates freely around the horizontal axis which cuts across the pasenger seat and around its own axis and of which the base is mounted to the front end of the armrest in perpendicular to the aforementioned horizontal axis, two parallel links of which each base is connected at the tip of the aforementioned supporting arm as a pivot and of which the tips are connected to a universal joint block making a parallelogram link mechanism in combination with the tip of the supporting arm and the universal joint block, and a mounting part which is connected to the aforementioned universal joint block in a way to function as a universal joint and where the display is mounted.

And the aforementioned supporting arm can be positioned at approximate horizontal condition, straight up condition and any desired angle from straight up to a certain forward bent angle, and the aforementioned parallelogram link mechanism can be rotated and positioned either to be on the plane in perpendicular to the horizontal axis or to be on the plane including the horizontal axis. Furthermore, the aforementioned parallelogram link mechanism can be positioned to be in parallel to the aforementioned supporting arm or rotated and positioned at any angle against the supporting arm, and the aforementioned mounting part is made to be able to fix the display in any desired direction.

When using the display, the supporting arm is pulled out of the opening of the display storage cavity of the armrest, then rotated around the horizontal axis cutting across the passenger seat for 90° and set to a straigt up position.

Next, if the supporting arm is rotated 90° around its own axis, the display will face the passenger and the display is in usable condition although not perfect.

After that, the display position and direction are adjusted as follows so that the display will be in the optimum position depending on the passenger's eye position, viewing direction and distance by the seat reclining condition and the sitting posture.

Rotate the parallelogram link mechanism within the range of straight up and horizontal and position at a desired angle, and adjust the display position, up and down or left and right, to a desired one and hold. Even if the display is moved up and down or left and right, the display will stay on the same plane and it will not tilt due to the parallelogram link mechanism.

Then, adjust the angle of the supporting arm within the range of straight up and the fixed forward bent position for optimum viewing distance. Also, adjust the facing angle of the display by using the universal joint of the universal joint block.

When retracting the display into the display storage cavity when the display is not in use, move the display by using the universal joint so that the display will fit within the rotational plane of the parallelogram link mechanism.

Rotate the parallelogram so that it will be in parallel to the supporting arm. Rotate the supporting arm around its own axis so that the display will fit within the rotational plane of the supporting arm.

Rotate the supporting arm until the supporting arm becomes horizontal and the display is stored in the display storage cavity of the armrest.

### Brief explanation of the drawings

Fig. 1 is a side-view of the movable display supporting device with the display mounted to the armrest of the seat of a passenger airplane in the best mode of this invention.

Fig. 2 is a front-view of the movable display supporting device with the display mounted to the armrest of the seat of a passenger airplane in the best mode of this invention.

Fig. 3 is a cross-section of the spherical joint of the movable display supporting device in the best mode of this invention.

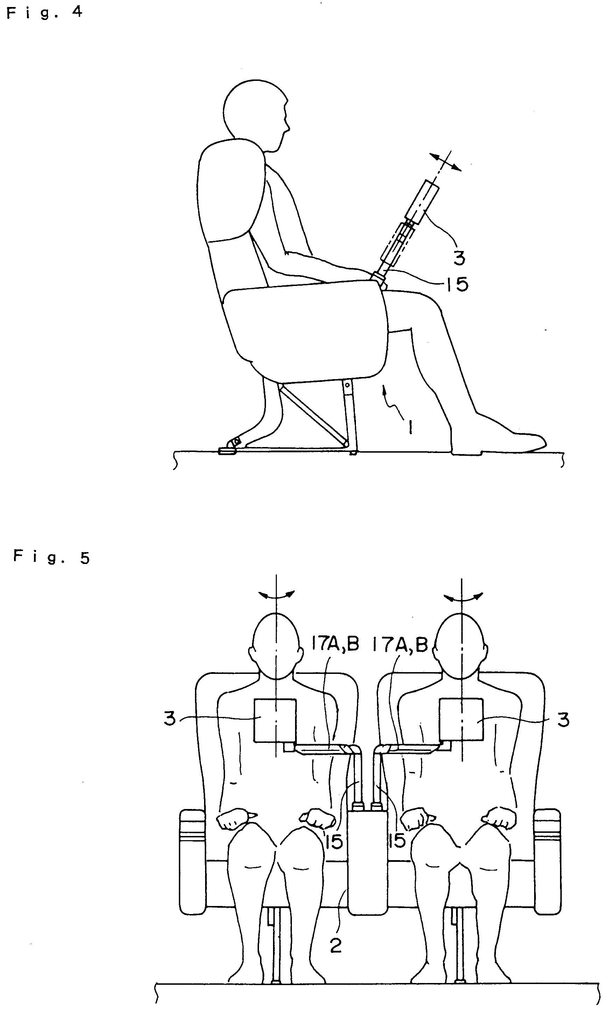

Fig. 4 is a side-view of the display in use mounted to the seat of a passenger airplane by the movable display supporting device in the best mode of this invention.

Fig. 5 is a front-view of the display in use mounted to the seat of a passenger airplane by the movable display supporting device in the best mode of this invention.

Fig. 6 is a rough side-view sketch of the movable display supporting device of example 1 mounting the display to the armrest portion of the seat of a passenger airplane based on the conventional technology.

Fig. 7 is a rough front-view sketch of the movable display supporting device of example 1 mounting the display to the armrest portion of the seat of a passenger airplane based on the conventional technology.

Fig. 8 is a rough side-view sketch of the movable display supporting device of example 2 mounting the display to the armrest portion of the seat of a passenger airplane based on the conventional technology.

Fig. 9 is a rough front-view sketch of the movable display supporting device of example 2 mounting the display to the armrest portion of the seat of a passenger airplane based on the conventional technology.

Fig. 10 is a rough side-view sketch of the movable display supporting device of example 3 mounting the display to the armrest portion of the seat of a passenger airplane based on the conventional technology.

Fig. 11 is a rough front-view sketch of the movable display supporting device of example 3 mounting the display to the armrest portion of the seat of a passenger airplane based on the conventional technology.

### Best mode of the invention

The movable supporting device of display for various image services installed on the seat of passenger airplane as the best mode of the invention is explained according to the drawings.

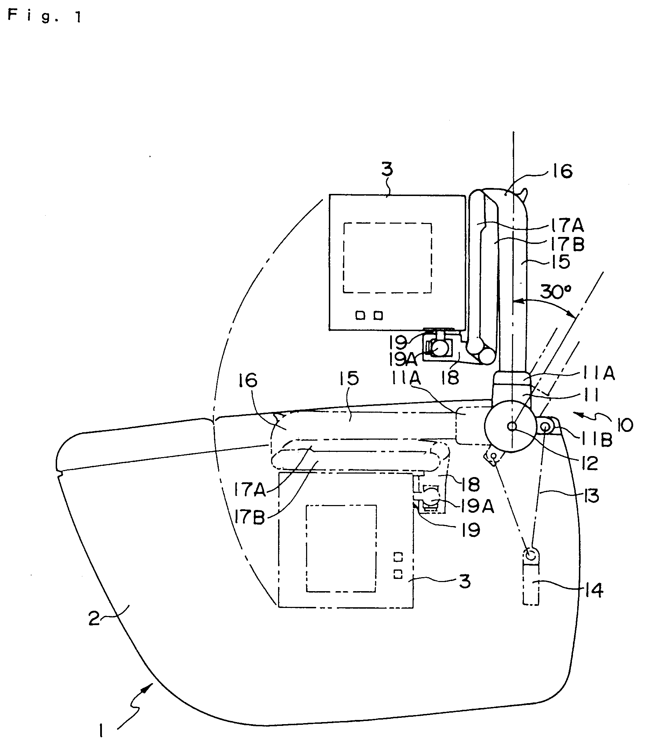

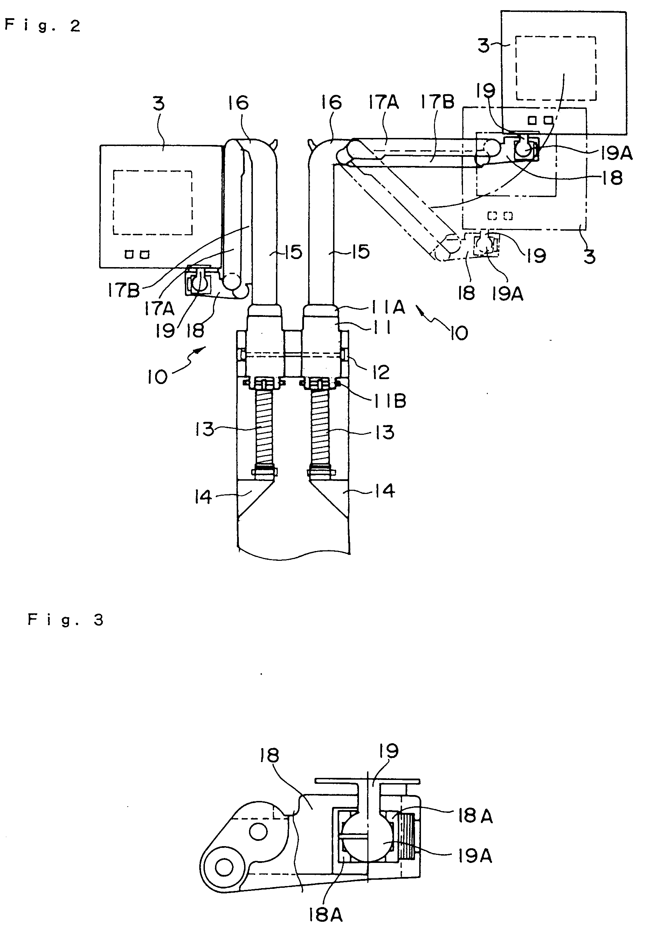

As described in Fig. 1 and Fig. 2, a display 3 is installed at the front end of the armrest 2 of the passenger seat 1 via a movable display supporting device 10, and a display storage cavity having an opening at the top is provided inside the armrest 2.

On the upper surface of the armrest 2, a lid to cover the opening and where the arm rests on is attached with a hinge in a way that the lid rotates and opens around the axis in the back and forth direction of the passenger seat.

The movable supporting device is structured as follows. At the front end of the armrest 2, the center of the rotating base 11 is connected to axis 12 as a pivot which freely rotates around the horizontal axis L1 which cuts across the passenger seat, and one end of the rotating base 11 is made to be a tube-shaped supporting pipe receptacle 11A and the other end is made to be a spring connector 11B where one end of the extension coil spring 13 is connected. To the supporting pipe receptacle 11A, the base end of the supporting pipe 15 is fitted in a way that the supporting pipe can rotate around its own axis between the two stoppers provided 90° apart and click stops at both stoppers. And the other end of the extension coil spring 13, which is connected to the spring connector 11B, is connected to the front lower portion of the display storage cavity via a fixing part 14, and when the supporting pipe 15 is in the straight up position, the spring connector 11B will come to its lowest position and the extension coil spring 13 will be in the most contracted status.

And the rotation of the rotating base 11 is made in a way that the rotating base stops at a position where the supporting pipe 15 becomes almost horizontal by the stopper, at a position where the supporting pipe 15 stands straight up, and at a desired angled position between the range of straight up and 30° forward bent of the supporting pipe 15. These stops are achieved by the friction plates which are pressed against both sides of the rotating base 11 by a bolt and by the balance between the weight moment of the entire display device and the extension coil spring 13.

An elbow part 16 is fixed at the tip of the supporting pipe 15, and each one end of the two links 17A and 17B, which are placed in parallel to each other and have the same length, is connected to the elbow part 16 as a pivot via a friction plate. The other end of the links 17A and 17B are connected as a pivot to the spherical joint block 18 via a friction plate. The line made by connecting the two pivot points of the two links, 17A and 17B, at the elbow part 16 crosses the axis of the supporting pipe 15 in 45°. In other words, a parallelogram link mechanism is formed by the elbow part 16, the link 17A, the link 17B and the spherical joint block 18, and the link 17A and the link 17B can rotate between one stop position where the links are in parallel to the supporting pipe 15 and the other stop position where the links are in perpendicular to the supporting pipe 15 and any position in between can be maintained.

The position where the rotating plane of the rotating links, 17A and 17B, is in the back and forth direction of the passenger seat (that is in parallel to the armrest 2) and the position where the rotating plane of the links is at the front side of the passenger seat are the two 90° apart stop positions for the base part of the supporting pipe 15.

In this parallelogram link mechanism, a gas damper is installed between the elbow part 16 and the spherical joint block 18 in the diagonal direction where the distance change occurs during rotation of the parallelogram link mechanism, and a force is applied in a way to enlarge the angle made by the links, 17A and 17B, and the supporting pipe 15 so that the balance with the display 3 weight is maintained between the two positions where the links, 17A and 17B, and the supporting pipe 15 make 45° angle and 90°.

As described in Fig. 3, mounting part 19 having spherical part 19A as a base, which is fitted into the spherical joint block 18 and functions as a spherical joint, projects in the direction almost parallel to the supporting pipe 15, and the lower end of the framework of the display 3 comprising the liquid crystal panel is fixed at the tip of the mounting part 19. The spherical part 19A of the mounting part 19 is pressed against the spherical washer 18A by the compression spring inside the spherical joint block 18 so that friction is caused between the two.

Furthermore, as described in Fig. 5, it is practical to provide two display storage cavities side by side inside the armrest 2 between the two adjacent seats for two displays 3 for each of the two passengers.

When the display 3 is stored in the display storage cavity inside the armrest 2, the links 17A and 17B are rotated to be in parallel to the supporting pipe 15, the display 3 is supported by the spherical joint to be in the rotational plane of the links 17A and 17B, and rotational angle position of the supporting pipe 15 is at one side of the two rotation stopper positions where the rotational plane of the links 17A and 17B conforms to the display storage cavity, and rotational angle position of the rotating base 11 is at the rotational stopper position where the supporting pipe 15 is in the horizontal position, as described in Fig. 1.

When using the display 3, open the lid of the armrest 2 by rotating the lid around the axis in the back and forth direction of the passenger seat to make opening for the display storage cavity, pull up the supporting pipe 15, rotate the rotational base 11 for 90° around axis 12 to make the supporting pipe 15 stand straight up. At this time, the extension coil spring 13 will contract to help the rotation, and the straight up position is held by the spring force. Then, close the lid by rotating in the opposite direction to cover the display storage cavity opening.

Next, as the supporting pipe 15 is already hitting the stopper, rotate the pipe 90° around its own axis. Then the supporting pipe 15 will click stop, the display 3 will be positioned facing the passenger ready for use, although not perfect. (See left side of Fig. 2.)

After that, the position and direction of the display 3 are adjusted as follows so that the display will be in the optimum position depending on the passenger's eye position, viewing direction and distance by the seat reclining condition and the sitting posture.

Rotate the links 17A and 17B to any desired angle within the range before the links reach horizontal position, adjust up and down or left and right position of the display 3 to an optimum position, and the display 3 will be held in that position by the friction of the friction plate. Even if the display 3 is moved up and down or left and right, the display 3 will stay on the same plane and it will not tilt due to the parallelogram link mechanism. (See right side of Fig. 2)

The rotational movement of the links 17A and 17B up to a point making 45° angle with the supporting pipe 15 will be made against the display 3 weight, gas damper effect and friction by the friction plate. On the other hand, regarding the rotational movement of the links between 45° point and 90° point, the desired rotational angle of the links is maintained by the gas damper effect, balancing with the display 3 weight and the friction by the friction plate.

Then, push the supporting pipe 15 forward to a desired angle within the range of straight up and approximately 30° forward bent to adjust to a desirable viewing distance. Furthermore, adjust the display 3 direction to an optimum facing angle by the movement of the spherical joint of the spherical joint block 18.

While the forward rotation of the supporting pipe 15 is made against the friction by the friction plate and the spring force by the extension coil spring 13, the desired angle is maintained by the friction of the friction plate. And while the adjustment of the display 3 direction by the spherical joint is made against the friction between the spherical washer 18A and the spherical part 19A by the compression spring, the desired direction of the display 3 is maintained by the friction.

The display 3 is stored in the display storage cavity when not in use, and the procedure for storage is in the reverse order of the above take out procedure.

In other words, first adjust the display 3 direction by the spherical joint of the spherical joint block 18 so that the display 3 is positioned within the rotational plane of the links 17A and 17B.

Rotate the links 17A and 17B so that the links are positioned in parallel to the supporting pipe 15. Rotate the supporting pipe 15 around its own axis so that the display 3 is positioned within the rotational plane of the supporting pipe 15.

Rotate the lid of the armrest 2 around the axis in the back and forth direction of the passenger seat to make opening for the display storage cavity, and rotate the supporting pipe 15 until the display 3 is fully stored inside the display storage cavity. Then rotate the lid of the armrest 2 in the opposite direction to cover the opening of the display storage cavity.

### Effects of the invention

The movable display supporting device under this invention enables the display to be easily moved and maintained to a position and direction suitable for the viewing distance which may vary depending on the eye position and viewing direction of the passenger affected by the sitting height and posture of the passenger and reclining condition of the passenger seat, and at the same time, enables the display to be compactly stored in the narrow display storage cavity inside the armrest by the passenger seat.

## Claims

1. A movable display supporting device which mounts the display to the armrest by the passenger seat having a display storage cavity with an opening at the top comprising:
a supporting arm, of which the base is mounted at the front end of the armrest in a way that the supporting arm is positioned in perpendicular to the horizontal axis cutting across the passenger seat, freely rotatable around said horizontal axis and freely rotatable around its own axis;
two links positioned in parallel to each other of which each base being connected to the tip of said supporting arm to be a pivot and each tip being connected to a universal joint block to be a pivot and making a prallelogram link mechanism in combination with the supporting arm tip and the universal joint block; and
a mounting part to which said display is mounted and connected to said universal joint block to function as a universal joint;
wherein,
said supporting arm can be positioned almost horizontal, straight up or at any desired angle within the range between straight up and certain forward bent angle and can be rotated in a way to position;
said parallelogram link mechanism either within the plane in perpendicular to the horizontal axis or within the plane including the horizontal axis; and
said parallelogram link mechanism can be positioned in parallel to said supporting arm or rotated and positioned at any desired angle against the supporting arm, and said mounting part can maintain the position of said display in any direction.

2. The movable display supporting device of Claim 1 further comprising:
a gas damper installed in said parallelogram link.
